# EUROPEAN PATENT SPECIFICATION

(11) **EP 0 983 722 B1**
(45) Date of publication and mention of the grant of the patent: **24.05.2006**
(21) Application number: 99202856.3
(22) Date of filing: 02.09.1999
(51) Int. Cl.: A01K 11/00, A01G 23/00

(54) **Method for identifying living organisms.**
Verfahren zur Identifizierung von lebenden Organismen
Procédé d'identification d'organismes vivants

(30) Priority: 02.09.1998 NL 1009999
(43) Date of publication of application: 08.03.2000
(73) Proprietor: FB Beheer B.V., 5263 GM Vught (NL)
(72) Inventor: Hendrikx, Jacques Gerardus Maria, 5242 HB Rosmalen (NL)
(74) Representative: Van den Heuvel, Henricus Theodorus

(56) References cited:
- EP-A- 0 821 912
- DE-A- 4 420 254
- DE-U- 9 300 444
- GB-A- 2 217 968
- US-A- 5 214 409
- US-A- 5 322 034
- US-A- 5 412 420

## Description

The invention relates to the field of identification of living organisms, such as humans and animals. For instance, in modem cattle farming the animals can have been provided with identification means which carry specific data. On the basis of these data the animal can be recognised by means of an associated detection apparatus.

In dairy farming the self-feeder and the milking robot can be operated after recognition by the detection apparatus. Moreover, both in dairy farming and in beef farming data relating to origin, medicines administered, history of diseases and the like can be recorded for the animals.

Specific data and events, such as milk yield, origin, diseases and the like, can have a major influence on the value of the animal in economic trading. This gives rise to the risk of fraud. In this context the data on the identification means can be changed or replaced with the aim of disguising less desirable data.

The consequence is that it is no longer possible reliably to check the origin and the history of the animal. Especially in the case of certain diseases, such as, for example, BSE, this can lead to unacceptable risks.

A proposal for an identification system for animals that is less susceptible to fraud is disclosed in WO-A 9202126. In this system an intelligent chip is used which is enclosed in an envelope of biocompatible material. Said material is constructed in such a way, with, for example, openings, that following implantation thereof in a cavity under the skin anchoring takes place as a result of the animal's tissue growing into the envelope.

After slaughter of the animal, that part of the envelope in which the intelligent chip is located can be removed in connection with identification of the slaughter products.

However, adequate reliability is not guaranteed with this identification system either. Despite the said anchoring in the animal, an attempt could still be made to replace the intelligent chip, apart from the fact that initially there is still no ingrowing tissue and therefore no anchoring.

A further method for the identification of an animal is disclosed in GB-A-2.217.968. According to said prior art method, characteristic data of cattle are stored, such as data of birth, birth weight, parental details etc. However, for a fully reliable identification of the cattle these data are not sufficient.

The aim of the invention is therefore to provide a more reliable identification method for living organisms. Said aim is achieved by means of a method for the identification of a living organism, comprising the following steps:
- the selection of at least one characteristic feature which is unchangeable at least during the lifetime of the living organism,
- recording of data related to said at least one feature on identification means,
- permanently attaching said identification means to the living organism, characterised by
- the at least one characteristic feature is a unique feature,
- recording said at least one unique feature in a register,
- combining the identification means and the at least one unique feature recorded in the register in a unique manner.

According to the invention the identification means now themselves carry data on the basis of which it is possible to check whether the particular identification means concerned do indeed belong to the living organism concerned. It is not always necessary to keep said data directly, for example visually, available. The only important aspect is that the data concerned in any event offer the possibility of checking the correspondence between animal and identification means on the basis of a more or less complex checking procedure.

Furthermore, the possibility for reliable checking at intervals has a powerful preventive effect, as a result of which fraud quickly becomes unattractive.

To ensure objectivity, the register is preferably administered by an independent agency.

Specific identification means and an associated recorded feature can always be unambiguously linked to one another by means of a specific code, which, for example, can be alphanumeric or a barcode.

In the event of doubt with regard to the identity of the living organism it is now possible to compare the specific feature, as observed directly on the living organism itself, with the "recorded" feature. If these agree, the data specified on the identification means, such as name, origin and the like, are correct.

According to a second possibility, the method comprises recording said at least one feature directly on the identification means.

A wide variety of such features, and optionally combinations thereof, can be used as characteristic feature for the living organism. Examples which may be mentioned are the DNA data, the marking pattern on the skin of the living organism, a vocal characteristic, a gene characteristic, the milk, the blood, faeces and/or urine, a colour characteristic, iriscopic data, external shape, etc.

Although reference has always been made to the identification of living organisms such as humans and animals, the method according to the invention can also be used for the identification of plants. In this context it is then possible to make use of, in particular, the DNA sequence of a gene.

The invention will be explained in more detail below with reference to the block diagrams shown in the figures.
Figure 1 shows the method for recording the identity of a living organism.
Figures 2 and 3 show the methods for establishing the identity of a living organism.

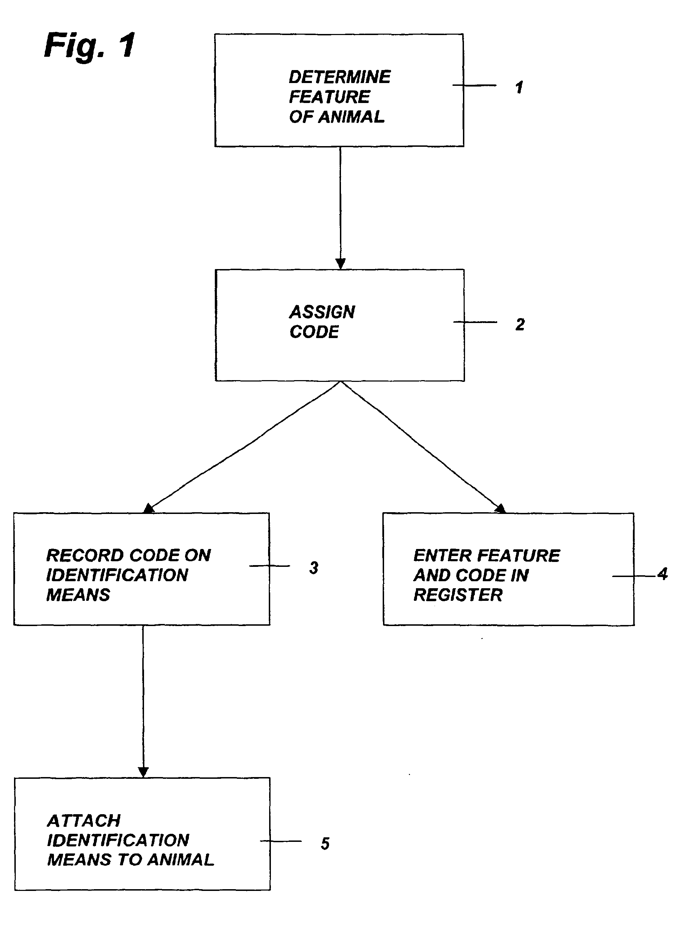

As shown in Figure 1, when recording the identity of a living organism in accordance with the method of the invention the desired feature is first determined in step 1. This step can preferably take place immediately after the birth of an animal, such that fraud with respect to the origin is virtually precluded.

In the second step 2 a code is assigned to the feature thus determined. Said code can consist of a specific combination of numerals and/or letters, or a barcode, a magnetic or optical pattern and the like. What is important is that the code is unique, that is to say that only the particular feature of the living organism has said specific code.

In order to be able to guarantee the greatest possible reliability, the codes are preferably compiled and issued by an independent agency.

In step 3 the code is recorded on identification means, such as an ear tag, to be fitted to the living organism and, more or less at the same time, the code, linked to a reliable description of the feature concerned, is recorded in a central register 4. Said register preferably falls under the administration of the said agency which also administers the compilation and issue of new codes.

Finally, in step 5 the identification means thus provided with a code are attached to the living organism. This takes place using techniques known per se.

As has already been stated above, the identity of the living organism can be established in a reliable manner. This can be necessary, for example, in the event of doubt with regard to the correctness of the data specified on the identification means.

Features which can be used as the unique feature on the basis of which a living organism can be reliably identified are the DNA data, marking pattern and the like. However, with this system it is not necessary for the DNA data already to be recorded beforehand. Initially it can suffice to take a sample from the animal, such as a piece of tissue from, for example, the ear of the living organism. Such a tissue sample, linked with the said code, is stored in a central file.

The DNA structure of the tissue sample and of the living organism itself is determined only when there is cause to check the identity of the living organism. If the DNA structures are found to correspond, identification is successful. Lack of correspondence is an irrefutable indication of fraud.

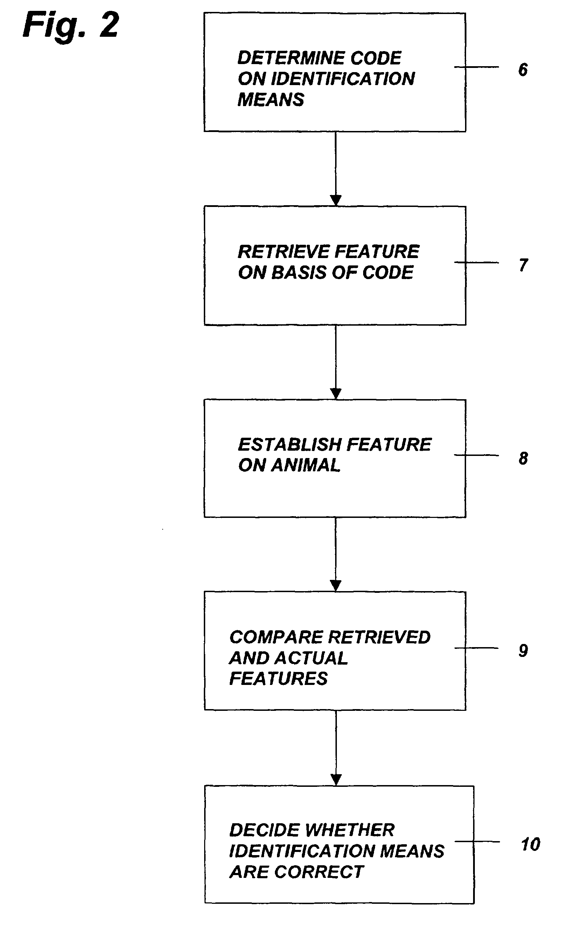

According to a first possibility, the procedure as shown in the block diagram in Figure 2 can be used to check said data.

As the first step the code can be read from the identification means at 6. In addition, on the basis of said code the associated data with regard to the associated characteristic feature of the living organism are retrieved from the central register (7).

The feature concerned can also be established on the living organism itself (8), where a decision with regard to the correctness (10) of the identification data on the ear tag can be taken on the basis of a comparison (9) of the characteristic feature retrieved and the characteristic feature found on the living organism itself.

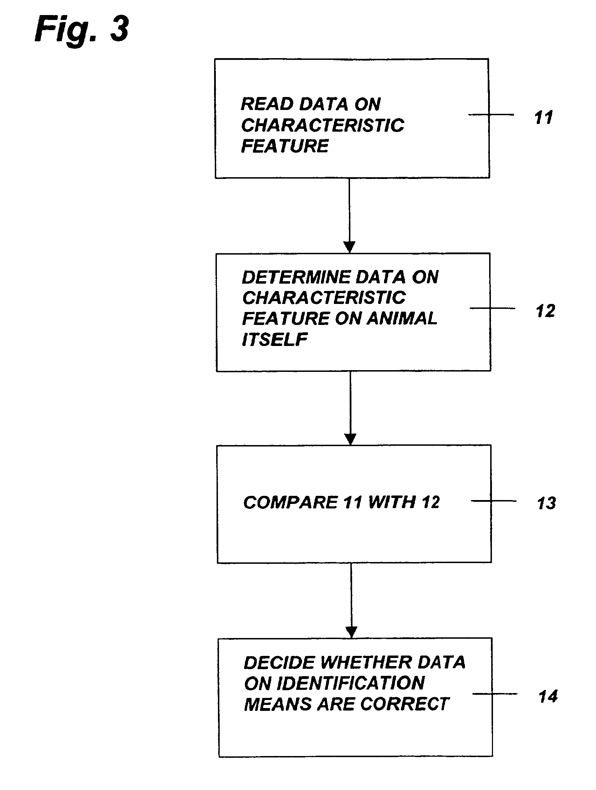

According to the variant in Figure 3, the data relating to the characteristic feature of the living organism are read off directly from the ear tag (11). After determining said data on the living organism itself (12) it is possible, on the basis of a comparison (13), directly to deduce (14) whether the data on the identification means (ear tag) are correct.

In the case of data which can be checked visually, such as a marking pattern or a shape characteristic, the check is very simple and direct.

## Claims

1. Method for the identification of a living organism, comprising the following steps:
- the selection of at least one characteristic feature which is unchangeable at least during the lifetime of the living organism,
- recording of data related to said at least one feature on identification means,
- permanently attaching said identification means to the living organism
**characterised by**
- the at least one characteristic feature is a unique feature,
- recording said at least one unique feature in a register,
- combining the identification means and the at least one unique feature recorded in the register in a unique manner.

2. Method according to Claim 1, comprising the combination of the identification means and the at least one feature recorded in the register by means of assigning a unique code to both.

3. Method according to Claim 1, comprising recording said at least one feature directly on the identification means.

4. Method according to one of the preceding claims, comprising the use of a sample of the tissue, hair and the like of the living organism as the feature.

5. Method according to one of the preceding claims, comprising a gene characteristic as characteristic feature for the living organism.

6. Method according to one of the preceding claims, comprising DNA data of the living organism as characteristic feature.

7. Method according to one of the preceding claims, comprising the marking pattern on the skin of the living organism as characteristic feature.

8. Method according to one of the preceding claims, comprising a vocal characteristic of the living organism as characteristic feature.

9. Method according to one of the preceding claims, comprising a characteristic of the milk of a living organism as characteristic feature.

10. Method according to one of the preceding claims, comprising a characteristic of the blood of a living organism as characteristic feature.

11. Method according to one of the preceding claims, comprising a characteristic of faeces and/or urine of a living organism as characteristic feature.

12. Method according to one of the preceding claims, comprising a colour characteristic of a living organism as characteristic feature.

13. Method according to Claim 12, comprising a densitometer for determination of the colour characteristic.

14. Method according to one of the preceding claims, comprising a characteristic of the iris of the eye of a living organism as characteristic feature (iriscopy).

15. Method according to one of the preceding claims, comprising a characteristic shape of a living organism as characteristic feature.

16. Method according to one of the preceding claims, comprising a human fingerprint as characteristic feature.

17. Method according to any of the preceding claims, comprising the selection of at least one unique feature associated with the body of the living organism.

18. Method according to claim 1 for the identification of a plant, comprising the following steps:
- the selection of at least one characteristic feature which is unchangeable at least during the life of the plant,
- recording of data related to said at least one feature on identification means and
- permanently attaching said identification means to the plant.

## Patentansprüche

1. Verfahren zur Identifizierung eines lebenden Organismus, das die folgenden Schritte umfasst:
- Wahl mindestens eines charakteristischen Merkmals, das zumindest während der Lebenszeit des lebenden Organismus unveränderlich ist,
- Aufzeichnen von Daten, die sich auf besagtes mindestens eine Merkmal beziehen, auf Identifizierungsmitteln,
- dauerhaftes Anbringen der besagten Identifizierungsmittel an dem lebenden Organismus,
**gekennzeichnet durch**:
- das mindestens eine charakteristische Merkmal ist ein einzigartiges Merkmal,
- das Aufzeichnen des besagten mindestens einen einzigartigen Merkmals in einem Register,
- das Kombinieren der Identifizierungsmittel mit dem mindestens einen einzigartigen Merkmal, das im Register aufgezeichnet ist, auf eine einzigartige Weise.

2. Verfahren nach Anspruch 1, das die Kombination der Identifizierungsmittel mit dem in dem Register aufgezeichneten mindestens einen Merkmal umfasst, indem beiden ein einzigartiger Code zugewiesen wird.

3. Verfahren nach Anspruch 1, das das Aufzeichnen des besagten mindestens einen Merkmals direkt auf den Identifizierungsmitteln umfasst.

4. Verfahren nach einem der vorhergehenden Ansprüche, das als Merkmal die Verwendung einer Gewebeprobe, einer Haarprobe und dergleichen des lebenden Organismus umfasst.

5. Verfahren nach einem der vorhergehenden Ansprüche, das eine Gencharakteristik als charakteristisches Merkmal für den lebenden Organismus umfasst.

6. Verfahren nach einem der vorhergehenden Ansprüche, das DNA-Daten des lebenden Organismus als charakteristisches Merkmal umfasst.

7. Verfahren nach einem der vorhergehenden Ansprüche, das das kennzeichnende Muster auf der Haut des lebenden Organismus als charakteristisches Merkmal umfasst.

8. Verfahren nach einem der vorhergehenden Ansprüche, das ein stimmliches Merkmal des lebenden Organismus als charakteristisches Merkmal umfasst.

9. Verfahren nach einem der vorhergehenden Ansprüche, das ein Merkmal der Milch eines lebenden Organismus als charakteristisches Merkmal umfasst.

10. Verfahren nach einem der vorhergehenden Ansprüche, das ein Merkmal des Bluts eines lebenden Organismus als charakteristisches Merkmal umfasst.

11. Verfahren nach einem der vorhergehenden Ansprüche, das ein Merkmal der Exkremente und/oder des Urins eines lebenden Organismus als charakteristisches Merkmal umfasst.

12. Verfahren nach einem der vorhergehenden Ansprüche, das ein Farbmerkmal eines lebenden Organismus als charakteristisches Merkmal umfasst.

13. Verfahren nach Anspruch 12, das ein Densitometer zur Bestimmung der Farbcharakteristik umfasst.

14. Verfahren nach einem der vorhergehenden Ansprüche, das ein Merkmal der Iris des Auges eines lebenden Organismus als charakteristisches Merkmal umfasst (Iriskopie).

15. Verfahren nach einem der vorhergehenden Ansprüche, das eine charakteristische Form eines lebenden Organismus als charakteristisches Merkmal umfasst.

16. Verfahren nach einem der vorhergehenden Ansprüche, das einen menschlichen Fingerabdruck als charakteristisches Merkmal umfasst.

17. Verfahren nach einem der vorhergehenden Ansprüche, das die Wahl von mindestens einem einzigartigen Merkmal, das mit dem Körper des lebenden Organismus in Zusammenhang steht, umfasst.

18. Verfahren nach Anspruch 1 zur Identifizierung einer Pflanze, das die folgenden Schritte umfasst:
- Wahl mindestens eines charakteristischen Merkmals, das zumindest während der Lebenszeit der Pflanze unveränderlich ist,
- Aufzeichnen von Daten, die sich auf besagtes mindestens eine Merkmal beziehen, auf Identifizierungsmitteln und
- dauerhaftes Anbringen der besagten Identifizierungsmittel auf der Pflanze.

## Revendications

1. Procédé d'identification d'un organisme vivant, comprenant les étapes suivantes :
- sélection d'au moins une particularité caractéristique qui est inchangeable au moins durant la vie de l'organisme vivant ;
- enregistrement de données relatives à ladite au moins une particularité sur un moyen d'identification ;
- fixation permanente dudit moyen d'identification à l'organisme vivant,
**caractérisé par :**
- **le fait que** la au moins une particularité caractéristique est une particularité unique;
- l'enregistrement de ladite au moins une particularité unique dans un registre ;
- la combinaison du moyen d'identification et de la au moins une particularité unique enregistrée dans le registre d'une manière unique.

2. Procédé selon la revendication 1, comprenant la combinaison du moyen d'identification et de la au moins une particularité enregistrée dans le registre au moyen de l'attribution d'un code unique aux deux.

3. Procédé selon la revendication 1, comprenant l'enregistrement de ladite au moins une particularité directement sur le moyen d'identification.

4. Procédé selon l'une quelconque des revendications précédentes, comprenant l'utilisation d'un échantillon du tissu, des poils ou d'un élément analogue de l'organisme vivant comme particularité.

5. Procédé selon l'une quelconque des revendications précédentes, comprenant une caractéristique génétique comme particularité caractéristique de l'organisme vivant.

6. Procédé selon l'une quelconque des revendications précédentes, comprenant des données sur l'ADN de l'organisme vivant comme particularité caractéristique.

7. Procédé selon l'une quelconque des revendications précédentes, comprenant le motif des marques sur la peau de l'organisme vivant comme particularité caractéristique.

8. Procédé selon l'une quelconque des revendications précédentes, comprenant une caractéristique vocale de l'organisme vivant comme particularité caractéristique.

9. Procédé selon l'une quelconque des revendications précédentes, comprenant une caractéristique du lait d'un organisme vivant comme particularité caractéristique.

10. Procédé selon l'une quelconque des revendications précédentes, comprenant une caractéristique du sang d'un organisme vivant comme particularité caractéristique.

11. Procédé selon l'une quelconque des revendications précédentes, comprenant une caractéristique des fèces et/ou de l'urine d'un organisme vivant comme particularité caractéristique.

12. Procédé selon l'une quelconque des revendications précédentes, comprenant une caractéristique de couleur d'un organisme vivant comme particularité caractéristique.

13. Procédé selon la revendication 12, comprenant un densitomètre pour déterminer la caractéristique de couleur.

14. Procédé selon l'une quelconque des revendications précédentes, comprenant une caractéristique de l'iris de l'oeil d'un organisme vivant comme particularité caractéristique (iridoscopie).

15. Procédé selon l'une quelconque des revendications précédentes, comprenant une forme caractéristique d'un organisme vivant comme particularité caractéristique.

16. Procédé selon l'une quelconque des revendications précédentes, comprenant une empreinte digitale humaine comme particularité caractéristique.

17. Procédé selon l'une quelconque des revendications précédentes, comprenant la sélection d'au moins une particularité unique associée au corps de l'organisme vivant.

18. Procédé selon la revendication 1 pour identifier une plante, comprenant les étapes suivantes :
- sélection d'au moins une particularité caractéristique qui est inchangeable au moins durant la vie de la plante ;
- enregistrement de données relatives à ladite au moins une particularité sur un moyen d'identification, et
- fixation permanente dudit moyen d'identification à la plante.
